# EUROPEAN PATENT SPECIFICATION

(11) **EP 4 091 043 B1**
(45) Date of publication and mention of the grant of the patent: **24.07.2024**
(21) Application number: 21715766.8
(22) Date of filing: 15.03.2021
(51) Int. Cl.: G06F 3/06, G06F 11/10

(54) **MAINTENANCE MODE FOR STORAGE NODES**
WARTUNGSMODUS FÜR SPEICHERKNOTEN
MODE DE MAINTENANCE DES NOEUDS DE STOCKAGE

(30) Priority: 16.03.2020 LU 101681
(43) Date of publication of application: 23.11.2022
(73) Proprietor: Microsoft Technology Licensing, LLC, Redmond, WA 98052-6399 (US)
(72) Inventor: SHANKAR, Vinod R., Redmond, Washington 98052 (US); LEE, Scott Chao-Chueh, Redmond, Washington 98052 (US); MATTHEW, Bryan Stephen, Redmond, Washington 98052 (US)
(74) Representative: CMS Cameron McKenna Nabarro Olswang LLP
(86) International application number: PCT/US2021/022387
(87) International publication number: WO 2021/188443

(56) References cited:
- US-A1- 2004 003 087
- US-A1- 2014 173 235
- US-A1- 2017 177 262

## Description

### TECHNICAL FIELD

The present disclosure relates to systems, methods, and devices for managing marginally-performing storage nodes within resilient storage systems.

### BACKGROUND

Storage systems often distribute data backing a data volume over a plurality of separate storage devices, and maintain redundant copies of each block of the data volume's underlying data on two or more of those storage devices. By ensuring that redundant copies of any given block of data are recoverable from two or more storage devices, these storage systems can be configured to be resilient to the loss of one or more of these storage devices. Thus, when a storage system detects a problem with a particular storage device, such as read or write errors, increases in the latency of input/output (I/O) operations, failed or timed-out I/O operations, etc., the storage system drops or "fails" that storage device, removing it from the set of storage devices backing the data volume. So long as a readable copy of all blocks of data of the data volume continue to exist in the remaining storage devices after failing a storage device, availability of the data volume can be maintained.

US 2014/173235 A1 describes a resilient distributed replicated data storage system. The storage system includes zones that are independent, and autonomous from each other. The zones include nodes that are independent and autonomous. The nodes include storage devices. When a data item is stored, it is partitioned into a plurality of data objects and a plurality of parity objects are calculated. Reassembly instructions are created for the data item. The data objects, parity objects and reassembly instructions are spread across nodes and zones in the storage system according to a policy for the data item. When a zone is inaccessible, a virtual zone is created and used until the intended zone is available. When a read request is received, the data item is prepared from the lowest latency nodes according to the reassembly instructions, and a virtual zone is accessed in place of a real zone when the real zone is inaccessible.

US 2017/177262 A1 describes technologies for managing a temperature of a solid state drive include monitoring the temperature to determine whether it satisfies a low threshold and a high threshold. If the temperature does satisfy the low threshold, the solid state drive throttles high power memory accesses requests while not throttle low power memory access requests. If the temperature satisfies a high threshold, the solid state drive is configured to throttle all memory accesses.

### BRIEF SUMMARY

The invention is set out in the appended set of claims.

At least some embodiments described herein introduce a reduced throughput "maintenance mode" for storage nodes that are part of a resilient storage group. In embodiments, upon detecting that a storage node is performing marginally, that storage node is placed in this maintenance mode, rather than failing the storage node from the storage group as would be typical. In embodiments, a storage node is considered to be performing marginally when it responds to I/O operations with increased latency, when some I/O operations fail or time out, and the like. When a storage node is in this maintenance mode, embodiments ensure that it maintains synchronization with the other storage nodes in its storage group by continuing to route write I/O operations to the storage node. In addition, embodiments reduce the read I/O load on the storage node. In some examples, the read I/O load on the storage node is reduced by deprioritizing the storage node for read I/O operations, causing those read I/O operations to preferably be sent to other storage nodes. In other examples, the read I/O load on the storage node is reduced by preventing any read I/O operations from reaching the node. Since conditions that can cause marginal performance of storage nodes are often transient, reducing the read I/O load on marginally-performing storage nodes can often give those storage nodes a chance to recover from their marginal performance, thereby avoiding failing these nodes.

In some embodiments, methods, systems, and computer program products adaptively manage I/O operations to a storage node that is operating in a reduced throughput mode, while maintaining synchronization of that storage node with a resilient group of storage nodes. These embodiments classify one or more first storage nodes in a resilient group of storage nodes as operating in a normal throughput mode, based on determining that each of the one or more first storage nodes are operating within one or more corresponding normal I/O performance thresholds for the storage node. These embodiments also classify one or more second storage nodes in the resilient group of storage nodes as operating in a reduced throughput mode, based on determining that each of the one or more second storage nodes are operating outside one or more corresponding normal I/O performance thresholds for the storage node. While the one or more second storage nodes are classified as operating in the reduced throughput mode, these embodiments queue a read I/O operation and a write I/O operation for the resilient group of storage nodes. Queuing the read I/O operation includes, based on the one or more second storage nodes operating in the reduced throughput mode, prioritizing the read I/O operation for assignment to the one or more first storage nodes. The read I/O operation is prioritized to the one or more first storage nodes to reduce I/O load on the one or more second storage nodes while operating in the reduced throughput mode. Queuing the write I/O operation includes queueing one or more write I/O operations to the one or more second storage nodes even though they are in the reduced throughput mode, the write I/O operations being queued to the one or more second storage nodes. The write I/O operation is queued to each of the one or more second storage nodes to maintain synchronization of the one or more second storage nodes with the resilient group of storage nodes while operating in the reduced throughput mode.

By maintaining synchronization of storage nodes operating in a reduced throughput mode, while reducing the read I/O load on those storage nodes, the embodiments herein give marginally-performing storage nodes a chance to recover from transient conditions causing their marginal performance. When compared to conventional storage systems that simply give up on those nodes and quickly fail them, these embodiments enable a storage system to maintain a greater number of redundant copies of data backing a corresponding storage volume, thereby enabling the storage system to provide increased resiliency of the storage volume, when compared to failing the storage node. Increasing resiliency of a storage volume also enables the storage system to provide improved availability of the storage volume. Additionally, if a storage node does recover from marginal operation, the storage system has avoided failing the node; thus, the storage system can also avoid a later repair/rebuild of the node, and negative performance impacts associated therewith. Furthermore, by permitting marginally-performing storage nodes to be active in storage group, albeit with reduced read I/O load, overall I/O performance of a storage volume can be improved, as compared to the conventional practice of failing those marginally-performing storage nodes.

This summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
Figures 1A and 1B illustrate example computer architectures that facilitate adaptively managing I/O operations to a storage node that is operating in a reduced throughput mode, while maintaining synchronization of that storage node with a resilient group of storage nodes;
Figure 2 illustrates a flow chart of an example method for adaptively managing I/O operations to a storage node that is operating in a reduced throughput mode, while maintaining synchronization of that storage node with a resilient group of storage nodes;
Figure 3 illustrates an example of distributing read I/O operations across storage nodes that include marginally-performing storage nodes;
Figure 4A illustrates an example of a resiliency group comprising four nodes that use RAID 5 resiliency; and
Figure 4B illustrates an example of a resiliency group comprising eight nodes that use RAID 60 resiliency.

### DETAILED DESCRIPTION

By using a reduced throughput maintenance mode for storage nodes, embodiments adaptively manage I/O operations within a resilient storage group to give marginally-performing nodes a chance to recover from transient marginal operating conditions. In particular, when a storage node is performing marginally, that storage node is placed in a reduced throughput maintenance mode. This maintenance mode ensures that the storage node maintains synchronization with the other storage nodes in its storage group by continuing to route write I/O operations to the storage node, but reduces the read I/O load on the storage node by deprioritizing the storage node for read I/O operations, or by preventing any read I/O operations from reaching the node. Thus, embodiments adaptively manage I/O operations to a storage node that is operating in a reduced throughput mode, while maintaining synchronization of that storage node with a resilient group of storage nodes.

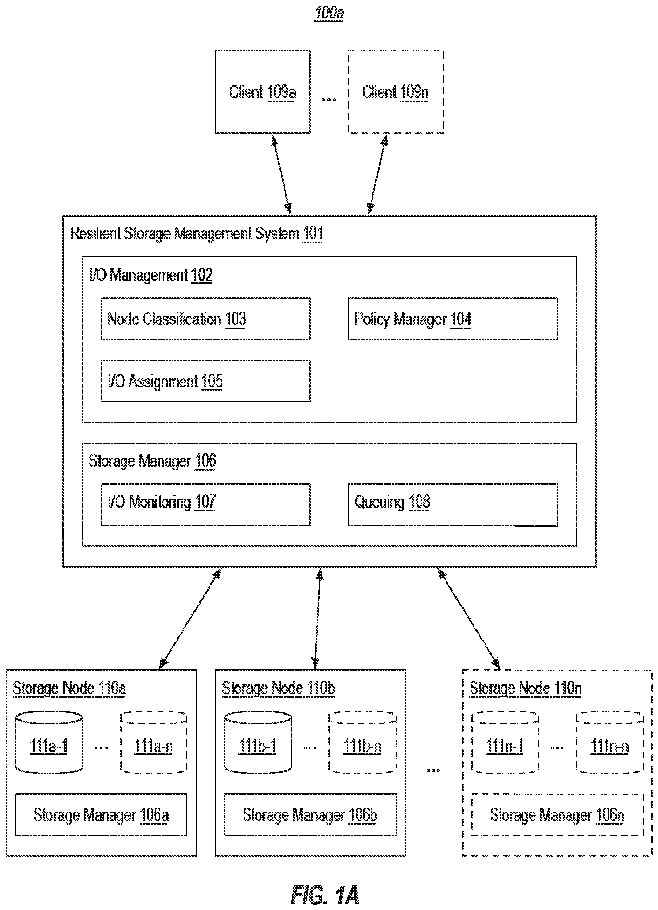

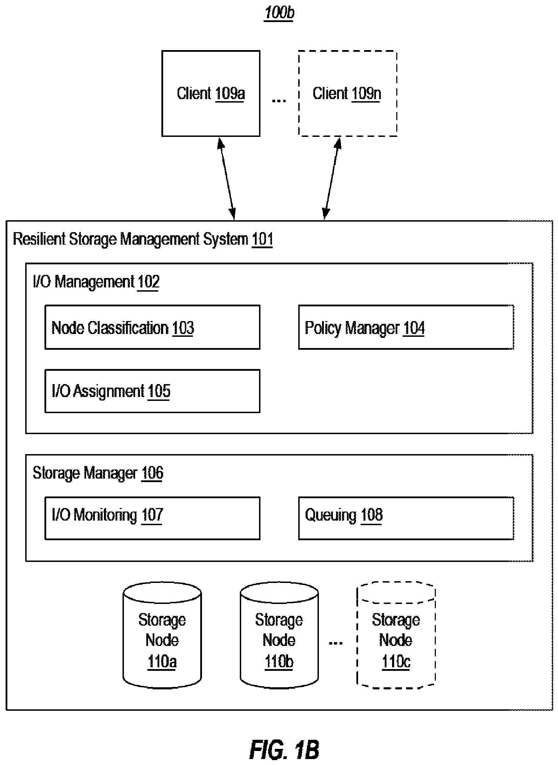

Figures 1A and 1B illustrate two example computer architectures 100a/100b that facilitate adaptively managing I/O operations to a storage node that is operating in a reduced throughput mode, while maintaining synchronization of that storage node with a resilient group of storage nodes. As shown in Figures 1A and 1B, computer architectures 100a/100b each include a storage management system 101 in communication with one or more clients 109 (e.g., clients 109a to 109n). In embodiments, such as when a client 109 comprises a separate physical computer system, the storage management system 101 communicates with the client 109 over a computer-to-computer communications channel, such as a network. In embodiments, such as when a client 109 comprises a virtual machine or application operating on the same physical hardware as the storage management system 101, the storage management system 101 communicates with the client 109 over a local communications channel, such as a local bus, shared memory, inter-process communications, etc.

In Figure 1A, in example computer architecture 100a the storage management system 101 is also in communication with a plurality of storage nodes 110 (e.g., storage nodes 110a, 110b, 110n). In computer architecture 100a, these storage nodes 110 each comprise computer systems that include one or more corresponding storage devices 111 (e.g., storage devices 111a-1 to 111a-n in storage node 110a, storage devices 111b-1 to 111b-n in storage node 110b, storage devices 111c-1 to 111c-n in storage node 110c). As used herein, a storage device comprises, or utilizes, computer storage hardware such as a magnetic storage device, a solid state storage device, and the like. In computer architecture 100a, the storage management system 101 communicates with the storage nodes 110 over a computer-to-computer communications channel, such as a network. In Figure 1B, on the other hand, in example computer architecture 100b the storage management system 101, itself, includes the plurality of storage nodes 110 (e.g., storage nodes 110a, 110b, 110n). In computer architecture 100b, these storage nodes 110 are, themselves, storage devices. Thus, in computer architecture 100b, the storage management system 101 communicates with the client 109 over a local communications channel, such as a local storage bus.

In general, the storage management system 101 operates to expose one or more storage volumes to clients 109, with the data backing each storage volume being resiliently distributed over the storage nodes 110. In embodiments, the storage management system 101 provides resiliency of storage volumes by ensuring data redundancy across the storage nodes 110 using data mirroring schemes and/or data parity schemes; as such, an exposed storage volumes is a resilient storage volume, and nodes 110 are a resilient group of storage nodes. In embodiments, the storage management system 101 provides resilience by ensuring that (i) a full copy of a given block of data is stored at two or more of the storage nodes 110 and/or that (ii) a given block of data is recoverable from two more of the storage nodes 110 using a parity scheme. In various implementations, the storage management system 101 could use a wide variety of technologies to resiliently store the data of a storage volume across the storage nodes 110, including well-known technologies such as hardware or software-based redundant array of independent disks (RAID) technologies. In general, given a plurality of N storage nodes 110 backing a resilient storage volume, the storage management system 101 enables data to be read by the clients 109 from the resilient storage volume even if M (where M<N) of those storage nodes 110 have failed or are otherwise unavailable.

As discussed, when using conventional storage management techniques, storage devices/nodes that are used to back a resilient storage volume are dropped or "failed" when they exhibit drops in performance, timeouts, data errors, etc. This notably decreases the potential resiliency of the storage volume, since removal of a storage devices/nodes from a resilient storage volume reduces the redundancy of the remaining data backing the storage volume. With redundancy being reduced, performance of the storage volume often suffers, since there are fewer data copies available for reading, which increases the read I/O load of the remaining storage devices/nodes. Furthermore, with resiliency being reduced, the availability of the storage volume could be adversely affected if additional storage devices/nodes fail, resulting in no copies of one or more blocks of the storage volume's data being available, and/or resulting in resiliency guarantees falling below a defined threshold.

The inventors have recognized that, when using conventional storage management techniques, some storage devices/nodes are frequently failed when those storage devices/nodes are operating marginally (e.g., with reduced performance/throughput), but that the marginal operation of those storage devices/nodes is frequently due to a transient, rather than permanent, operating condition. The inventors have also recognized that, if given the opportunity, many storage devices/nodes would often be able to recover from their marginal operating state. For example, a storage node that is a computer system could transiently operate with reduced performance/throughput because of network congestion, because of other work being performed at the computer system (e.g., operating system updates, application load, etc.), because of transient issues with its storage devices, etc. A storage device could transiently operate with reduced performance/throughput because it is attempting to recover a marginal physical sector/block, because it is re-mapping a bad sector/block or it is otherwise self-repairing, because it is performing garbage collection, because a threshold I/O queue depth has been exceeded, etc.

Thus, as an improvement to conventional storage management techniques, the storage management system 101 of computer architectures 100a/100b introduces a new and unique "reduced throughput" (or "reduced read") maintenance mode/state for storage nodes 110. As a general introduction of this maintenance mode, suppose that storage node 110b is identified as exhibiting marginal performance (e.g., due to I/O operations directed to the node timing out, due to the latency of I/O responses from the node increasing, etc.). In embodiments, rather than failing storage node 110b, the storage management system 101 classifies that node as being in the reduced throughput maintenance mode to give the node a chance to recover from a transient marginal performance condition. While storage node 110b is classified in the reduced throughput maintenance mode, the storage management system 101 continues to direct writes to the storage node 110b as would be normal for the particular resiliency/mirroring technique being used; by directing writes to marginally performing storage node 110b, the node maintains data synchronization with the other nodes backing a storage volume, maintaining data resiliency within the storage volume and potentially preserving availability of the storage volume. In addition, while storage node 110b is classified in the reduced throughput maintenance mode, the storage management system 101 directs some, or all, reads away from the storage node 110b and to other storage nodes backing the data volume (i.e., to storage nodes 110a, 110n, etc.); by directing reads away from storage node 110b, new I/O load at the node is reduced, giving the node a chance to recover from the situation causing marginal performance so that the node can return to normal operation.

In embodiments, it is possible that, after classifying a storage node 110 as being in the reduced throughput maintenance mode, the storage management system 101 determines that marginal performance of the storage node 110 is permanent (or at least long-lasting), rather than transitory. For example, the storage node 110 could continue to exhibit marginal performance that exceeds certain time thresholds and/or I/O latency thresholds, the storage node 110 could fail to respond to a threshold number of I/O operations, the storage node 110 could produce data errors, etc. In embodiments, if the storage management system 101 does determine that marginal performance of a storage node 110 is permanent/long-lasting, the storage management system 101 then proceeds to fail the storage node 110 as would be conventional.

Notably, there are a number of distinct technical advantages to a storage system that uses this new maintenance mode to give marginally-performing storage nodes a chance to recover from transient conditions, as compared to conventional storage systems that simply give up on those nodes and quickly fail them. One advantage is that, by keeping a marginally-performing storage node online and continuing to direct writes to the node, rather than failing it, the storage system can maintain a greater number of redundant copies of data backing a corresponding storage volume, thereby enabling the storage system to provide increased resiliency of the storage volume (as compared to failing the storage node). Increasing resiliency of a storage volume leads to another advantage of the storage system being able to provide improved availability of the storage volume. Additionally, if a storage node does recover from marginal operation after having been placed this new maintenance mode, the storage system has avoided failing the node; thus, the storage system can also avoid a later repair/rebuild of the node which, as will be appreciated by one of ordinary skill in the art, can be a long and I/O-intensive process that can significantly decrease overall I/O performance in a corresponding storage volume during the repair/rebuild. Thus, another advantage of a storage system that uses this new maintenance mode is that it can avoid costly repairs/rebuilds of failed storage nodes, along with the significant negative performance impacts associated therewith. In addition, if the new maintenance mode permits some read operations to be routed to marginally-performing storage nodes, but at a reduced/throttled rate, these marginally-performing storage nodes can carry some of the read I/O load that would otherwise be routed to other storage nodes if the marginally-performing storage nodes had instead been failed. Thus, in these situations, another advantage of a storage system that uses this new maintenance mode is that overall I/O performance of a corresponding storage volume can be improved when there are storage nodes in the maintenance mode, as compared to the conventional practice of failing those marginally-performing storage nodes.

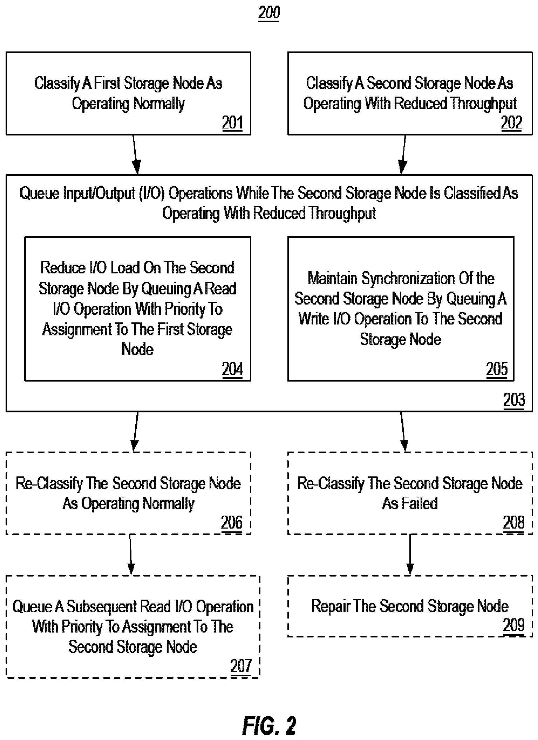

A more particular description of this new maintenance mode is now provided in reference to additional example components of storage management system 101 and/or storage nodes 110, and in reference to a method 200, illustrated in Figure 2, for adaptively managing I/O operations to a storage node (e.g., the one or more second storage nodes, referenced below) that is operating in a reduced throughput mode, while maintaining synchronization of that storage node with a resilient group of storage nodes. It is noted that these additional components of the storage of storage management system 101 and/or the storage nodes 110are provided primarily as an aid in description of the principles herein, and that the details of various implementations of the principles herein could wide variety. As such, the illustrated components of the storage management system 101 and/or the storage nodes 110 should be understood to be one example only, and non-limiting to possible implementations and/or the scope of the appended claims. Additionally, although the method acts in method 200 may be discussed in a certain orders, or may be illustrated in a flow chart as occurring in a particular order, no particular ordering is required unless specifically stated, or required because an act is dependent on another act being completed prior to the act being performed.

As shown in Figures 1A and 1B, the storage management system 101 includes an I/O management component 102, and a storage manager component 106. In embodiments, the I/O management component 102 is an "upper" layer component that manages the distribution I/O operations among the storage nodes 110 as part of managing a resilient storage volume, while the storage manager component 106 is a "lower" layer component that interfaces with individual storage nodes 110. The I/O management component 102 determines how various I/O operations are to be assigned to available storage nodes 110 based on those node's current status, and instructs the storage manager component 106 to deliver assigned I/O operations to the appropriate storage node(s). To accomplish these tasks, the I/O management component 102 is shown as including a node classification component 103, a policy manager component 104, and an I/O assignment component 105. Based on instructions from the I/O management component 102, the storage manager component 106 interfaces with the storage nodes 110 to queue I/O operations to storage nodes as needed. Based on its communications with the storage nodes 110, the storage manager component 106 also tracks I/O metrics for each storage node. To accomplish these tasks, the storage manager component 106 is shown as including an I/O monitoring component 107 and a queueing component 108.

In computer architecture 100a, each storage node 110 is also shown as including a storage manager component 106 (i.e., storage manager components 106a, 106b, and 106n). Thus, in some implementations of computer architecture 100a the described functionality of the storage manager component 106 is performed at the storage management system 101 only, in other implementations of computer architecture 100a the described functionality of the storage manager component 106 is performed at the storage nodes 110 only, and in yet other implementations of computer architecture 100a the described functionality of the storage manager component 106 is shared by the storage management system 101 and the storage nodes 110. In embodiments, in computer architecture 100b, the described functionality of the storage manager component 106 is performed at the storage management system 101.

In embodiments, the node classification component 103 utilizes I/O metrics produced by the I/O monitoring component 107 to monitor storage nodes 110, and to classify an operating mode for each storage node 110 based on that node's I/O metrics. In embodiments, the I/O monitoring component 107 is adaptive, continually (or at least occasionally) re-classifying storage nodes, as needed, as their I/O metrics change over time. In embodiments, the node classification component 103 classifies each storage node 110 as being in one of at least a normal throughput mode, a reduced throughput mode (i.e., the new maintenance mode introduced previously), or failed (though additional modes/states may be compatible with the principles described herein). In embodiments, a storage node 110 is classified as operating in a normal throughput mode when it responds to I/O operations within a threshold latency period, when I/O operation failures and/or time-outs are below a threshold, etc. Conversely, in embodiments a storage node 110 is classified as operating in a reduced throughput mode when I/O operations lag (e.g., when it responds to I/O operations outside of the threshold latency period), when I/O operations fail and/or time-out (e.g., when I/O operation failures and/or time-outs are above the threshold), etc. In embodiments, a storage node 110 is classified as failed when is produces read or write errors, when I/O operations continue to lag (e.g., beyond time period and/or I/O operation count thresholds), when I/O operations continue to fail and/or time-out (e.g., beyond time period and/or I/O operation count thresholds), etc.

Based on storage node classifications made by the I/O monitoring component 107, the I/O assignment component 105 determines to which of storage nodes 110 various pending I/O operations should be assigned, and sends these assignments to the storage manager component 106. In embodiments, the I/O assignment component 105 makes these assignment decisions based on one or more polices managed by the policy manager component 104. Depending on policy, for an individual I/O operation, the assignment component 105 could assign the operation to a single storage node, or the assignment component 105 could assign the operation for distribution to a group of storage nodes (with, or without priority within that group). In general, (i) if a storage node 110 is classified as operating in the normal throughput mode, that node is assigned all read and write I/O operations as would be appropriate for the resiliency scheme being used; (ii) if a storage node 110 is classified as operating in the reduced throughput mode, that storage is assigned all write I/O operations that would be appropriate for the resiliency scheme being used, but it is assigned less than all read I/O operations that would be normally appropriate for the resiliency scheme being used (i.e., such that reads are reduced/throttled); and (iii) if a storage node 110 is classified as failed, no I/O operations are assigned to the node.

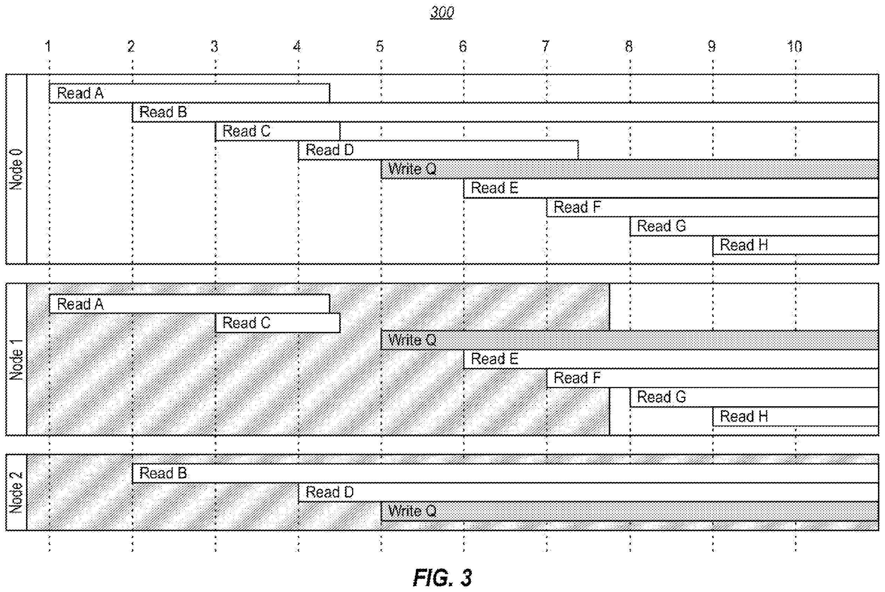

The policy manager component 104 can implement a wide variety of policies for assigning read I/O operations to storage nodes that are in a reduced throughput maintenance mode. These policies can take into account factors such as the resiliency scheme being used (which can affect, for example, how many storage nodes are needed to read a given block of data), how many storage nodes are available in the normal throughput mode, how many storage nodes are available in the reduced throughput maintenance mode, how long each node in the maintenance mode has been in this mode, a current I/O load on each storage node, etc. In embodiments, some policies avoid assigning I/O operations to storage nodes that are in the reduced throughput maintenance mode whenever possible or practical, while other policies do assign I/O operations to these storage nodes in some situations. For example, some policies may choose to assign some read I/O operations to a storage node that is in the reduced throughput maintenance mode when that node is needed to fulfil the read per the resiliency scheme being used, when that node has been in the reduced throughput maintenance mode longer than other nodes that are in the reduced throughput maintenance mode, when that node has fewer pending or active I/O operations than other nodes that are in the reduced throughput maintenance mode, etc. A particular non-limiting example of a policy that assigns read I/O operations to nodes that are in the reduced throughput maintenance mode is given later in connection with Figure 3.

Upon receipt of I/O operation assignments from the I/O management component 102, the storage manager component 106 queues these I/O operations to appropriate storage nodes 110 (i.e., using queuing component 108). The storage manager component 106 also monitors I/O traffic with storage nodes 110 (i.e., using the I/O monitoring component 107), and produces I/O metrics for use by the node classification component 103. Examples of I/O metrics for a node include a latency of responses to I/O operations directed at the node, a failure rate of I/O operations directed at node, a timeout rate of I/O operations directed at the node, and the like.

Turning now to Figure 2, method 200 comprises an act 201 of classifying a first storage node as operating normally, and an act 202 of classifying a second storage node as operating with reduced throughput. No particular ordering is shown between acts 201 and 202; thus, depending on implementation and particular operating environment, they could be performed in parallel, or serially (in either order). In some embodiments, act 201 comprises classifying one or more first storage nodes in a resilient group of storage nodes as operating in a normal throughput mode, based on determining that each of the one or more first storage nodes are operating within one or more corresponding normal I/O performance thresholds for the storage node, while act 202 comprises classifying one or more second storage nodes in the resilient group of storage nodes as operating in a reduced throughput mode, based on determining that each of the one or more second storage nodes are operating outside one or more corresponding normal I/O performance thresholds for the storage node. In an example of operation of method 200, the one or more first storage nodes in act 201 could correspond to storage node 110a, while the one or more second storage nodes in act 202 could correspond to storage node 110b, both in a resilient group of storage nodes comprising storage nodes 110. Given these mappings, in this example, the node classification component 103 therefore classifies storage node 110a as operating in the normal throughput mode, and classifies storage node 110b as operating in the reduced throughput mode (i.e., based on I/O metrics produced by the I/O monitoring component 106 from prior communications with those nodes). For example, these classification could be based on I/O metrics for storage node 110a indicating that it has been communicating with the storage manager component 106 within normal I/O thresholds for storage node 110a, and on I/O metrics for storage node 110b could indicating that it has not been communicating with the storage manager component 106 within normal I/O thresholds for storage node 110b.

Although not shown in Figure 2, in the present invention, method 200 comprises determining the one or more corresponding normal I/O performance thresholds for at least one storage node based on past I/O performance of the at least one storage node. In these embodiments, the I/O monitoring component 107 monitors I/O operations sent to storage nodes 110, and/or monitors responses to those I/O operations. From this monitoring, the I/O monitoring component 107 (or some other component, such as the node classification component 103) determines typical I/O performance metrics for the storage nodes 110, which metrics are the basis for identifying normal I/O performance thresholds. In some embodiments, the one or more corresponding normal I/O performance thresholds for at least one storage node include at least one of a threshold latency of responses to I/O operations directed at the at least one storage node, a threshold failure rate for I/O operations directed at the at least one storage node, or a threshold timeout rate for I/O operations directed at the at least one storage node. In some embodiments, normal I/O performance thresholds are general for an entire storage group (i.e., all of storage nodes 110); thus, in these embodiments, the one or more corresponding normal I/O performance thresholds are identical for all storage nodes within the resilient group. In other embodiments, normal I/O performance thresholds can differ for different storage nodes within the storage group. For example, each storage node 110 could have its own corresponding normal I/O performance threshold, and/or subsets of storage nodes 110 could have their own corresponding normal I/O performance threshold based on nodes in the subset having like or identical hardware; in this later example, the one or more corresponding normal I/O performance thresholds are identical for all storage nodes within the resilient group that include a corresponding storage device of the same type.

Returning to the flowchart, method 200 also comprises an act 203 of queueing I/O operations while the second storage node is classified as operating with reduced throughput. As shown, this can include an act 204 that queues read I/O operation(s), and an act 205 that queues write I/O operation(s). No particular ordering is shown between acts 204 and 205; thus, depending on implementation and particular operating environment, they could be performed in parallel, or serially (in either order).

As shown, act 204 reduces I/O load on the second storage node by queuing a read I/O operation with priority to assignment to the first storage node. In some embodiments, act 204 comprises, while the one or more second storage nodes are classified as operating in the reduced throughput mode, queuing a read I/O operation for the resilient group of storage nodes, including, based on the one or more second storage nodes operating in the reduced throughput mode, prioritizing the read I/O operation for assignment to the one or more first storage nodes, the read I/O operation being prioritized to the one or more first storage nodes to reduce I/O load on the one or more second storage nodes while operating in the reduced throughput mode. Since the one or more first storage nodes and the one or more second storage nodes are in a resilient group of storage nodes, in embodiments each of the one or more first storage nodes and each of the one or more second storage nodes stores at least one of: (i) a copy of at least a portion of data that is a target of the read I/O operation, or (ii) at least a portion of parity information corresponding to the copy of data that is the target of the read I/O operation. In one example of operation of act 204, based on policy from the policy manager 204, and because storage node 110b is classified as operating in the reduced throughput mode, I/O assignment component 105 assigns the read I/O operation to storage node 110a, rather than storage node 110b. As a result of the assignment, the queueing component 108 places the read I/O operation in an I/O queue for storage node 110a. This results in a reduced I/O load on storage node 110b (as compared to if storage node 110b were instead operating in the normal throughput mode).

In another example of operation of act 204, based on policy from the policy manager 204, and because storage node 110b is classified as operating in the reduced throughput mode, I/O assignment component 105 assign the read I/O operation to a group of storage nodes that includes storage node 110a. This group could even include storage node 110b, though with a reduced priority as compared with storage node 110a. As a result of the assignment, the queueing component 108 places the read I/O operation in an I/O queue for one or more storage nodes in the group based on I/O load of those of storage nodes. In embodiments, while it is possible that the I/O operation could be queued to storage node 110b, so long as the other storage node(s) in the group (e.g., storage node 110b) are not too busy the I/O operation is queued to one of these other storage nodes (e.g., storage node 110b) instead. If the I/O operation is ultimately queued to a storage node other than storage node 110b, this results in a reduced I/O load on storage node 110b (as compared to if storage node 110b were instead operating in the normal throughput mode).

Depending on policy from the policy manager component 104, prioritizing the read I/O operation for assignment to at least one of the one or more first storage nodes could result in different outcomes, such as (i) assigning the read I/O operation to at least one of the one or more first storage nodes in preference to any of the one or more second storage nodes, (ii) assigning the read I/O operation to at least one of the one or more second storage nodes when an I/O load on at least one of the one or more first storage nodes exceeds a threshold, (iii) assigning the read I/O operation to at least one second storage node based on how long the at least one second storage node has operated in the reduced throughput mode compared to one or more others of the second storage nodes, and/or (iv) preventing the read I/O operation from being assigned to any of the one or more second storage nodes.

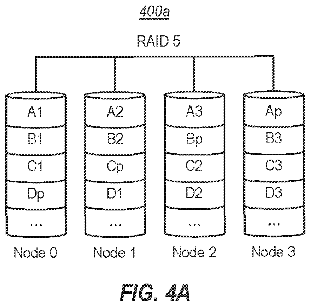

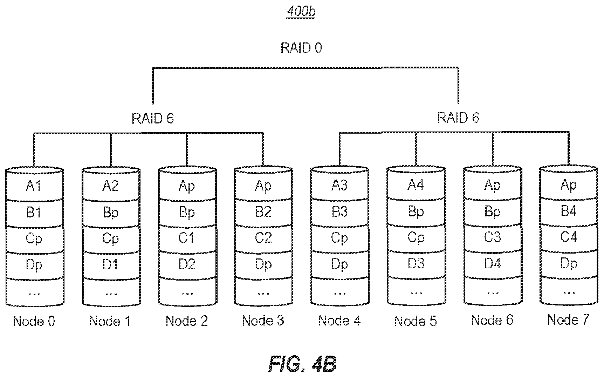

With respect to outcome (ii), it is noted that a read I/O operation could be assigned to a second storage node that is classified as being in the reduced throughput mode (i) when the I/O load on a portion of the first storage nodes exceeds the threshold, or (ii) when the I/O load on all the first storage nodes that could handle the I/O operation exceeds the threshold. It is also noted that the ability of a given storage node to handle a particular I/O operation can vary depending the resiliency scheme being used, what data is stored at each storage node, the nature of the I/O operation, and the like. For example, Figure 4A illustrates an example 400a of a resiliency group comprising four nodes (i.e., node 0 to node 3) that use RAID 5 resiliency. In example 400a, each disk stores a corresponding portion of a data stripe (i.e. stripes A, B, C, D, etc.) using a data copy or a parity copy (e.g., for stripe A, data copies A1, A2, and A3 and parity copy Ap). In the context of example 400a, if node 0 is in the reduced throughput mode, some embodiments direct a read I/O operation for stripe A to nodes 1-3 (i.e., to obtain A2, A3, and Ap). However, if the I/O node on load 2 exceeds a threshold, even if nodes 1 and 3 have low I/O load, some embodiments redirect the read of from node 2 to node 0 instead (thus reading A1, A2, and Ap instead of A2, A3, and Ap). In another example, Figure 4B illustrates an example 400b of a resiliency group comprising eight nodes (i.e., node 0 to node 7) that use RAID 60 resiliency. In example 400b, each disk also stores a corresponding data stripe using data copies and parity copies. However, in example 400b there are two RAID 6 groups-node set { 0, 1, 2, 3 } and node set { 4, 5, 6, 7 }-that are then arranged using RAID 0. Here, for each stripe, each RAID 6 group stores two data copies and two parity copies. In embodiments, given the RAID 60 resiliency scheme, a read for a given stripe needs to include at least two reads to nodes in set { 4, 5, 6, 7 } and at least two reads to nodes in set { 0, 1, 2, 3 }. Considering two reads to nodes in set { 0, 1, 2, 3 }, if there is a read I/O operation for stripe A, in some embodiments the read might normally be directed to nodes 0 and 1, in order to avoid a read from parity. If node 0 is in the reduced maintenance mode, however, embodiments might initially assign the reads to nodes 1 and 2 (though it is possible that they could be assigned to nodes 1 and 3 instead). Assuming an initial assignment nodes 1 and 2, in embodiments a read could be redirected to node 0 (even though it is in the maintenance mode) because (i) the I/O load of node 2 higher than a threshold (regardless of the IO load of node 3), (ii) the I/O loads of both node 2 node 3 are higher than a corresponding threshold for that node, or (iii) the I/O load of any two of nodes 1-3 exceed a corresponding threshold for that node.

As shown, act 205 maintains synchronization of the second storage node by queuing a write I/O operation to the second storage node. In some embodiments, act 205 comprises, while the one or more second storage nodes are classified as operating in the reduced throughput mode, queuing one or more write I/O operations to the one or more second storage nodes even though they are in the reduced throughput mode, the write I/O operations being queued to the one or more second storage nodes to maintain synchronization of the one or more second storage nodes with the resilient group of storage nodes while operating in the reduced throughput mode. In an example, the I/O assignment component 105 assigns the write I/O operation to storage node 110b, even though it is classified as operating in the reduced throughput mode, to maintain synchronization of storage node 110b with the other storage nodes 110 (including, for example, storage node 110a which is also assigned the write I/O operation). As a result of the assignment, the queueing component 108 places the write I/O operation in an I/O queue for storage node 110b and other relevant storage nodes, if any, (such as storage node 110a).

After act 203, storage node 110b could return to normal operation, such that the at least one second storage node subsequently operates within the one or more corresponding normal I/O performance thresholds for the at least one second storage node after having prioritized the read I/O operation for assignment to the one or more first storage nodes, rather than assigning the read I/O operation to the at least one second storage node. In some situations, storage node 110b could return to normal operation as a result of act 203, such that the at least one second storage node operates within the one or more corresponding normal I/O performance thresholds for the at least one second storage node as a result of having prioritized the read I/O operation for assignment to the one or more first storage nodes, rather than assigning the read I/O operation to the at least one second storage node.

Thus, in some embodiments, after act 203, method 200 proceeds to an act 206 of re-classifying the second storage node as operating normally. In some embodiments, act 206 comprises, subsequent to queuing the read I/O operation and queuing the write I/O operations, re-classifying at least one of the second storage nodes as operating in the normal throughput mode, based on determining that the at least one second storage node is operating within the one or more corresponding normal I/O performance thresholds for the at least one second storage node. In an example, based on I/O monitoring component 107 producing new I/O metrics indicating that the storage node 110b is no longer operating marginally, the node classification component 103 reclassifies the storage node 110b as operating in the normal throughput mode. Notably, in this situation, marking at least one of the one or more second storage nodes as failed has been prevented by (i) prioritizing the read I/O operation for assignment to the one or more first storage nodes, and (ii) queueing the write I/O operations for assignment to one or more second storage nodes.

If method 200 does proceeds to act 206, in some embodiments method 200 could also proceed to an act 207 of queueing a subsequent read I/O operation with priority to assignment to the second storage node. In some embodiments, act 207 comprises, based on the at least one second storage node operating in the normal throughput mode, prioritizing a subsequent read I/O operation for assignment to the at least one second storage node. In an example, since storage node 110b has been re-classified as operating in the normal throughput mode, the I/O assignment component 105 assigns read I/O operations to it as would be normal, rather than throttling or redirecting those read I/O operations.

Alternatively, despite act 203, in some situations storage node 110b could fail to return to normal operation. Thus, in other embodiments, after act 203, method 200 proceeds to an act 208 of re-classifying the second storage node as failed. In some situations, a storage node is re-classified as failed if it does not respond to a read I/O operation within certain time thresholds. Thus, in some embodiments, act 208 comprises, subsequent to queuing the read I/O operation, re-classifying at least one of the second storage nodes as failed, based on determining that the at least one second storage node failed to respond to the read I/O operation within a first threshold amount of time. In other situations, a storage node is re-classified as failed if it does not respond to a write I/O operation within certain time thresholds. Thus, in some embodiments, act 208 comprises, subsequent to queuing the write I/O operations, re-classifying at least one of the second storage nodes as failed, based on determining that the at least one second storage node failed to respond to at least one of the write I/O operations within a second threshold amount of time. In some embodiments the first threshold amount of time and the second threshold amount of time are the same, while in other embodiments the first threshold amount of time and the second threshold amount of time are different. In an example, based on I/O monitoring component 107 producing new I/O metrics indicating that the storage node 110b continues to operate marginally, is no longer responding, or is producing errors, the node classification component 103 reclassifies the storage node 110b as having failed. If method does proceed to act 208, in some embodiments method 200 could also proceed to an act 209 of repairing the second storage node. In some embodiments, act 209 comprises, subsequent to re-classifying the at least one second storage nodes as failed, repairing the at least one second storage node to restore it to the resilient group.

Notably, if method 200 is performed by computer architecture 100a, the storage nodes 110 are, themselves, computer systems. In this situation, in method 200, at least one of the one or more first storage nodes or the one or more second storage nodes comprises a remote computer system in communication with the computer system. Conversely, if method 200 is performed by computer architecture 100b, the storage nodes 110 are, themselves, storage devices. In this situation, in method 200, at least one of the one or more first storage nodes or the one or more second storage nodes comprise a storage device at the computer system. As will be appreciated, hybrid architectures are also possible, in which some storage nodes are remote computer systems, and other storage nodes are storage devices.

As mentioned, in some embodiments the policy manager 104 includes policies that choose to assign some read I/O operations to a storage node that is in the reduced throughput maintenance mode. This could be because the node is needed to fulfill a read per the resiliency scheme being used, because the node has been in the maintenance mode longer than other nodes that are in the maintenance mode, because the node has fewer pending or active I/O operations than other nodes that are in the maintenance mode, etc.

To demonstrate an example policy that assigned reads to nodes that are in the maintenance mode, Figure 3 illustrates an example 300 of distributing read I/O operations across storage nodes that include marginally-performing storage nodes. Example 300 represents a timeline of read and write operations across three storage nodes--node 0 (N0), node 1 (N1), and node 3 (N3). In example 300, diagonal lines are used to represent times at which a node is operating in the reduced throughput maintenance mode. Thus, as shown, N1 is in the maintenance mode until just prior to time point 8, while N1 is in the maintenance mode throughout the entire example 300. In example 300, a policy assigns read operations to nodes that are in the maintenance mode based on (i) a need to use at least two nodes to conduct a read (e.g., as might be the case in a RAIDS configuration), and (ii) current I/O load at the node.

At time 1, the I/O assignment component 105 needs to assign a read operation, read A, to at least two nodes. In example 300, the I/O assignment component 105 chooses N0 because it is not in the maintenance mode, and also chooses N1. Since there are no existing I/O operations on N1 and N2 prior to time 1, the choice of N1 over N2 could be arbitrary. However, other factors could be used. For example, N1 might be chosen over N2 because it has been in the maintenance mode longer than N2, because its performance metrics are better than N2's etc. At time 2, the I/O assignment component 105 needs to assign a read operation, read B, to at least two nodes. Now, since N1 has one existing I/O operation and N2 has none, the I/O assignment component 105 assigns read B to N0 and N2. At time 3, the I/O assignment component 105 needs to assign a read operation, read C, to at least two nodes. Now, N1 and N2 each have one existing I/O operation, so a choice between N1 and N2 may be arbitrary, based on which node has been in maintenance mode longer, etc. In example 300, the I/O assignment component 105 assigns read C to N0 and N1. At time 4, the I/O assignment component 105 needs to assign a read operation, read D, to at least two nodes. N1 now has two existing I/O operations, and N2 has one. Thus, in example 300, the I/O assignment component 105 assigns read D to N0 and N2. After time 4, read A and read C complete, such that N1 now has zero existing I/O operations, and N2 has two. Then, at time 5, the I/O assignment component 105 needs to assign a write operation, write Q, which the I/O assignment component 105 assigns to each node in order to maintain synchronization. At time 6, the I/O assignment component 105 needs to assign a read operation, read E, to at least two nodes. N1 now has one existing I/O operation, and N2 has three. Thus, in example 300, the I/O assignment component 105 assigns read E to N0 and N1. At time 7, the I/O assignment component 105 needs to assign a read operation, read F, to at least two nodes. N1 now has two existing I/O operations, and N2 still has three. Thus, in example 300, the I/O assignment component 105 assigns read F to N0 and N1. After time 7, N1 exits the maintenance mode. Thus, at times 8 and 9, the I/O assignment component 105 assigns reads G and H to N0 and N1, avoiding N2 because it is still in the maintenance mode.

Accordingly, the embodiments herein introduce a reduced throughput "maintenance mode" for storage nodes that are part of a resilient storage group. This maintenance mode is used to adaptively manage I/O operations within the resilient storage group to give marginally-performing nodes a chance to recover from transient marginal operating conditions. For example, upon detecting that a storage node is performing marginally, that storage node is placed in this maintenance mode, rather than failing the storage node as would be typical. When a storage node is in this maintenance mode, embodiments ensure that it maintains synchronization with the other storage nodes in its resilient storage group by continuing to route write I/O operations to the storage node. In addition, embodiments reduce the read I/O load on the storage node, such as by deprioritizing the storage node for read I/O operations, or preventing any read I/O operations from reaching the node. Since conditions that can cause marginal performance of storage nodes are often transient, reducing the read I/O load on marginally-performing storage nodes can often give those storage nodes a chance to recover from their marginal performance, thereby avoiding failing these nodes.

Although the subject matter has been described in language specific to structural features and/or methodological acts, it is to be understood that the subject matter defined in the appended claims is not necessarily limited to the described features or acts described above, or the order of the acts described above. Rather, the described features and acts are disclosed as example forms of implementing the claims.

Embodiments of the present invention may comprise or utilize a special-purpose or general-purpose computer system that includes computer hardware, such as, for example, one or more processors and system memory, as discussed in greater detail below. Embodiments within the scope of the present invention also include physical and other computer-readable media for carrying or storing computer-executable instructions and/or data structures. Such computer-readable media can be any available media that can be accessed by a general-purpose or special-purpose computer system. Computer-readable media that store computer-executable instructions and/or data structures are computer storage media. Computer-readable media that carry computer-executable instructions and/or data structures are transmission media. Thus, by way of example, and not limitation, embodiments of the invention can comprise at least two distinctly different kinds of computer-readable media: computer storage media and transmission media.

Computer storage media are physical storage media that store computer-executable instructions and/or data structures. Physical storage media include computer hardware, such as RAM, ROM, EEPROM, solid state drives ("SSDs"), flash memory, phase-change memory ("PCM"), optical disk storage, magnetic disk storage or other magnetic storage devices, or any other hardware storage device(s) which can be used to store program code in the form of computer-executable instructions or data structures, which can be accessed and executed by a general-purpose or special-purpose computer system to implement the disclosed functionality of the invention.

Transmission media can include a network and/or data links which can be used to carry program code in the form of computer-executable instructions or data structures, and which can be accessed by a general-purpose or special-purpose computer system. A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer system, the computer system may view the connection as transmission media. Combinations of the above should also be included within the scope of computer-readable media.

Further, upon reaching various computer system components, program code in the form of computer-executable instructions or data structures can be transferred automatically from transmission media to computer storage media (or vice versa). For example, computer-executable instructions or data structures received over a network or data link can be buffered in RAM within a network interface module (e.g., a "NIC"), and then eventually transferred to computer system RAM and/or to less volatile computer storage media at a computer system. Thus, it should be understood that computer storage media can be included in computer system components that also (or even primarily) utilize transmission media.

Computer-executable instructions comprise, for example, instructions and data which, when executed at one or more processors, cause a general-purpose computer system, special-purpose computer system, or special-purpose processing device to perform a certain function or group of functions. Computer-executable instructions may be, for example, binaries, intermediate format instructions such as assembly language, or even source code.

Those skilled in the art will appreciate that the invention may be practiced in network computing environments with many types of computer system configurations, including, personal computers, desktop computers, laptop computers, message processors, hand-held devices, multiprocessor systems, microprocessor-based or programmable consumer electronics, network PCs, minicomputers, mainframe computers, mobile telephones, PDAs, tablets, pagers, routers, switches, and the like. The invention may also be practiced in distributed system environments where local and remote computer systems, which are linked (either by hardwired data links, wireless data links, or by a combination of hardwired and wireless data links) through a network, both perform tasks. As such, in a distributed system environment, a computer system may include a plurality of constituent computer systems. In a distributed system environment, program modules may be located in both local and remote memory storage devices.

Those skilled in the art will also appreciate that the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources (e.g., networks, servers, storage, applications, and services). The definition of "cloud computing" is not limited to any of the other numerous advantages that can be obtained from such a model when properly deployed.

A cloud computing model can be composed of various characteristics, such as on-demand self-service, broad network access, resource pooling, rapid elasticity, measured service, and so forth. A cloud computing model may also come in the form of various service models such as, for example, Software as a Service ("SaaS"), Platform as a Service ("PaaS"), and Infrastructure as a Service ("laaS"). The cloud computing model may also be deployed using different deployment models such as private cloud, community cloud, public cloud, hybrid cloud, and so forth.

Some embodiments, such as a cloud computing environment, may comprise a system that includes one or more hosts that are each capable of running one or more virtual machines. During operation, virtual machines emulate an operational computing system, supporting an operating system and perhaps one or more other applications as well. In some embodiments, each host includes a hypervisor that emulates virtual resources for the virtual machines using physical resources that are abstracted from view of the virtual machines. The hypervisor also provides proper isolation between the virtual machines. Thus, from the perspective of any given virtual machine, the hypervisor provides the illusion that the virtual machine is interfacing with a physical resource, even though the virtual machine only interfaces with the appearance (e.g., a virtual resource) of a physical resource. Examples of physical resources including processing capacity, memory, disk space, network bandwidth, media drives, and so forth.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. When introducing elements in the appended claims, the articles "a," "an," "the," and "said" are intended to mean there are one or more of the elements. The terms "comprising," "including," and "having" are intended to be inclusive and mean that there may be additional elements other than the listed elements.

## Claims

1. A method (200), implemented at a computer system that includes at least one processor, for adaptively managing input/output (I/O) operations to one or more second storage nodes that are operating in a reduced throughput mode, while maintaining synchronization of nodes in a resilient group of storage nodes that comprise the one or more second storage nodes and at least one other storage node, the method comprising:
classifying (201) one or more first storage nodes in the resilient group of storage nodes as operating in a normal throughput mode, based on determining that each of the one or more first storage nodes are operating within one or more corresponding normal I/O performance thresholds for the respective first storage node, wherein at least one of the one or more normal I/O performance thresholds for the respective first storage node are determined based on past I/O performance of the respective first storage node;
classifying (202) the one or more second storage nodes in the resilient group of storage nodes as operating in a reduced throughput mode, based on determining that each of the one or more second storage nodes are operating outside one or more corresponding normal I/O performance thresholds for the respective second storage node, wherein at least one of the one or more of normal I/O performance thresholds for the respective second storage node are determined based on past I/O performance of the respective second storage node; and
while the one or more second storage nodes are classified as operating in the reduced throughput mode:
queuing (203) a read I/O operation for the resilient group of storage nodes, including, based on the one or more second storage nodes operating in the reduced throughput mode, prioritizing the read I/O operation for assignment to the one or more first storage nodes, the read I/O operation being prioritized to the one or more first storage nodes to reduce I/O load (204) on the one or more second storage nodes while operating in the reduced throughput mode; and
queuing (203) one or more write I/O operations to the one or more second storage nodes even though they are in the reduced throughput mode, the one or more write I/O operations being queued tc the one or more second storage nodes to maintain synchronization (205) of the nodes within the resilient group of storage nodes while operating in the reduced throughput mode.

2. The method of claim 1, further comprising, subsequent to queuing the read I/O operation and queuing the one or more write I/O operations, re-classifying (206) at least one of the second storage nodes as operating in the normal throughput mode, based on determining that the at least one second storage node is operating within the one or more corresponding normal I/O performance thresholds for the at least one second storage node.

3. The method of claim 2, further comprising, based on the at least one second storage node operating in the normal throughput mode, prioritizing (207) a subsequent read I/O operation for assignment to the at least one second storage node.

4. The method of any claim 2 or claim 3, wherein the at least one second storage node subsequently operates within the one or more corresponding normal I/O performance thresholds for the at least one second storage node after having prioritized the read I/O operation for assignment to the one or more first storage nodes, rather than assigning the read I/O operation to the at least one second storage node.

5. The method of claim 1, further comprising at least one of:
subsequent to queuing the read I/O operation, re-classifying (208) at least one of the second storage nodes as failed, based on determining that the at least one second storage node failed to respond to the read I/O operation within a first threshold amount of time; or
subsequent to queuing the write I/O operations, re-classifying (208) at least one of the second storage nodes as failed, based on determining that the at least one second storage node failed to respond to at least one of the write I/O operations within a second threshold amount of time.

6. The method of claim 5, further comprising, subsequent to re-classifying the at least one second storage nodes as failed, repairing (209) the at least one second storage node to restore it to the resilient group.

7. The method of any preceding claim, wherein at least one of the one or more first storage nodes or the one or more second storage nodes comprises a storage device.

8. The method of any preceding claim, wherein at least one of the one or more first storage nodes or the one or more second storage nodes comprises a remote computer system in communication with the computer system.

9. The method of any preceding claim, wherein each of the one or more first storage nodes and each of the one or more second storage nodes stores at least one of: (i) a copy of at least a portion of data that is a target of the read I/O operation, or (ii) at least a portion of parity information corresponding to the copy of data that is the target of the read I/O operation.

10. The method of any preceding claim, wherein prioritizing the read I/O operation for assignment to at least one of the one or more first storage nodes comprises at least one of:
assigning the read I/O operation to at least one of the one or more first storage nodes in preference to any of the one or more second storage nodes;
assigning the read I/O operation to at least one of the one or more second storage nodes when an I/O load on at least one of the one or more first storage nodes exceeds a threshold;
assigning the read I/O operation to at least one second storage node based on a duration of time the at least one second storage node has operated in the reduced throughput mode compared to one or more others of the second storage nodes; or
preventing the read I/O operation from being assigned to any of the one or more second storage nodes.

11. The method of any preceding claim, wherein the one or more corresponding normal I/O performance thresholds for at least one storage node include at least one of:
a threshold latency for responses to I/O operations directed at the at least one storage node;
a threshold failure rate for I/O operations directed at the at least one storage node; or
a threshold timeout rate for I/O operations directed at the at least one storage node.

12. The method of claim of any preceding claim, wherein the one or more corresponding normal I/O performance thresholds are identical for all storage nodes within the resilient group.

13. The method of any preceding claim, wherein the one or more corresponding normal I/O performance thresholds are identical for all storage nodes within the resilient group that include a corresponding storage device of the same type.

14. The method of any preceding claim, wherein marking at least one of the one or more second storage nodes as failed is prevented by prioritizing the read I/O operation for assignment to the one or more first storage nodes and queueing the write I/O operations for assignment to the one or more second storage nodes.

15. A computer system (101) comprising means for adaptively managing input/output (I/O) operations to one or more second storage nodes that are operating in a reduced throughput mode, while maintaining synchronization of nodes in a resilient group of storage nodes that comprise the one or more second storage nodes and at least one other storage node , the computer system arranged to:
classify one or more first storage nodes (110b) in the resilient group (110) of storage nodes as operating in a normal throughput mode, based on determining that each of the one or more first storage nodes are operating within one or more corresponding normal I/O performance thresholds for the respective first storage node, wherein at least one of the one or more normal I/O performance thresholds for the respective first storage node are determined based on past I/O performance of the respective first storage node;
classify the one or more second storage nodes (110a) in the resilient group (110) of storage nodes as operating in a reduced throughput mode, based on determining that each of the one or more second storage nodes are operating outside one or more corresponding normal I/O performance thresholds for the respective second storage node, wherein at least one of the one or more of normal I/O performance thresholds for the respective second storage node are determined based on past I/O performance of the respective second storage node; and
while the one or more second storage nodes are classified as operating in the reduced throughput mode:
queue a read I/O operation for the resilient group of storage nodes, including, based on the one or more second storage nodes operating in the reduced throughput mode, prioritizing the read I/O operation for assignment to the one or more first storage nodes, the read I/O operation being prioritized to the one or more first storage nodes to reduce I/O load on the one or more second storage nodes while operating in the reduced throughput mode; and
queue one or more write I/O operations to the one or more second storage nodes even though they are in the reduced throughput mode, the one or more write I/O operations being queued to the one or more second storage nodes to maintain synchronization of the nodes with the resilient group of storage nodes while operating in the reduced throughput mode.

## Patentansprüche

1. Verfahren (200), implementiert auf einem Computersystem das mindestens einen Prozessor zum adaptiven Verwalten von Eingabe-/Ausgabevorgängen (E/A) an einen oder mehrere zweite Speicherknoten einschließt, die in einem Modus mit reduziertem Durchsatz arbeiten, während die Synchronisierung von Knoten in einer ausfallsicheren Gruppe von Speicherknoten, die den einen oder die mehreren zweiten Speicherknoten und mindestens einen weiteren Speicherknoten umfasst, aufrechterhalten wird, wobei das Verfahren umfasst:
Klassifizieren (201) eines oder mehrerer erster Speicherknoten in der ausfallsicheren Gruppe von Speicherknoten als in einem normaler Durchsatzmodus arbeitend, auf der Grundlage des Bestimmens, dass jeder der einen oder der mehreren ersten Speicherknoten innerhalb eines oder mehrerer entsprechender normaler E/A-Leistungsschwellenwerte für den jeweiligen ersten Speicherknoten arbeitet, wobei mindestens einer des einen oder der mehreren normalen E/A-Leistungsschwellenwerte für den jeweiligen ersten Speicherknoten auf der Grundlage der vergangenen E/A-Leistung des jeweiligen ersten Speicherknotens bestimmt wird;
Klassifizieren (202) des einen oder der mehreren zweiten Speicherknoten in der ausfallsicheren Gruppe von Speicherknoten als in einem Modus mit reduziertem Durchsatz arbeitend, auf der Grundlage des Bestimmens, dass jeder der einen oder der mehreren zweiten Speicherknoten außerhalb eines oder mehrerer entsprechender normaler I/O-Leistungsschwellenwerte für den jeweiligen zweiten Speicherknoten arbeitet, wobei mindestens einer des einen oder der mehreren normalen I/O-Leistungsschwellenwerte für den jeweiligen zweiten Speicherknoten auf der Grundlage der vergangenen I/O-Leistung des jeweiligen zweiten Speicherknotens bestimmt wird; und
während der eine oder die mehreren zweiten Speicherknoten als im Modus mit reduziertem Durchsatzmodus arbeitend klassifiziert sind:
Einreihen (203) eines Lese-E/A-Vorgangs für die ausfallsichere Gruppe von Speicherknoten in eine Warteschlange, einschließlich, auf der Grundlage des einen oder der mehreren zweiten Speicherknoten, die im Modus mit reduziertem Durchsatz arbeiten, des Priorisierens des Lese-E/A-Vorgangs zur Zuweisung an den einen oder die mehreren ersten Speicherknoten, wobei der Lese-E/A-Vorgang für den einen oder die mehreren ersten Speicherknoten priorisiert wird, um die E/A-Last (204) auf dem einen oder den mehreren zweiten Speicherknoten während des Arbeitens im Modus mit reduziertem Durchsatz zu reduzieren; und
Einreihen (203) eines oder mehrerer Schreib-E/A-Vorgänge in den einen oder die mehreren zweiten Speicherknoten in die Warteschlange, auch wenn diese sich im Modus mit reduziertem Durchsatz befinden, wobei der eine oder die mehreren Schreib-E/A-Vorgänge für einen oder die mehreren zweiten Speicherknoten in die Warteschlange eingereiht werden, um die Synchronisierung (205) der Knoten innerhalb der ausfallsicheren Gruppe von Speicherknoten während des Arbeitens im Modus mit reduziertem Durchsatz aufrechtzuerhalten.

2. Verfahren nach Anspruch 1, das ferner nach dem Einreihen des Lese-E/A-Vorgangs und dem Einreihen des einen oder der mehreren Schreib-E/A-Vorgänge das Neuklassifizieren (206) von mindestens einem der zweiten Speicherknoten als im normalen Durchsatzmodus arbeitend umfasst, auf der Grundlage des Bestimmens, dass der mindestens eine zweite Speicherknoten innerhalb des einen oder der mehreren entsprechenden normalen E/A-Leistungsschwellenwerte für den mindestens einen zweiten Speicherknoten arbeitet.

3. Verfahren nach Anspruch 2, das ferner, auf der Grundlage, dass der mindestens eine zweite Speicherknoten im normalen Durchsatzmodus arbeitet, das Priorisieren (207) einer nachfolgenden Lese-E/A-Operation zur Zuweisung zu dem mindestens einen zweiten Speicherknoten umfasst.

4. Verfahren nach Anspruch 2 oder Anspruch 3, wobei der mindestens eine zweite Speicherknoten anschließend innerhalb des einen oder der mehreren entsprechenden normalen E/A-Leistungsschwellenwerte für den mindestens einen zweiten Speicherknoten arbeitet, nachdem er den E/A-Lesevorgang für die Zuweisung zu dem einen oder den mehreren ersten Speicherknoten priorisiert hat, anstatt den E/A-Lesevorgang dem mindestens einen zweiten Speicherknoten zuzuweisen.

5. Verfahren nach Anspruch 1, ferner umfassend mindestens eines von:
nach dem Einreihen des Lese-E/A-Vorgangs in die Warteschlange, Neuklassifizieren (208) von mindestens einem der zweiten Speicherknoten als ausgefallen, auf der Grundlage des Bestimmens, dass der mindestens eine zweite Speicherknoten nicht innerhalb einer ersten Schwellenzeit auf den Lese-E/A-Vorgang reagiert hat; oder
nach dem Einreihen der Schreib-E/A-Vorgänge in die Warteschlange, Neuklassifizieren (208) von mindestens einem der zweiten Speicherknoten als ausgefallen, auf der Grundlage des Bestimmens, dass der mindestens eine zweite Speicherknoten nicht innerhalb einer zweiten Schwellenzeit auf mindestens einen der Schreib-E/A-Vorgänge reagiert hat.

6. Verfahren nach Anspruch 5, das ferner nach dem erneuten Klassifizieren des mindestens einen zweiten Speicherknotens als ausgefallen das Reparieren (209) des mindestens einen zweiten Speicherknotens umfasst, um ihn wieder in die ausfallsichere Gruppe aufzunehmen.

7. Verfahren nach einem der vorhergehenden Ansprüche, wobei mindestens einer des einen oder der mehreren ersten Speicherknoten oder des einen oder der mehreren zweiten Speicherknoten eine Speichervorrichtung umfasst.

8. Verfahren nach einem der vorhergehenden Ansprüche, wobei mindestens einer des einen oder der mehreren ersten Speicherknoten oder des einen oder der mehreren zweiten Speicherknoten ein entferntes Computersystem umfasst, das mit dem Computersystem in Verbindung steht.

9. Verfahren nach einem der vorhergehenden Ansprüche, wobei jeder des einen oder der mehreren ersten Speicherknoten und jeder des einen oder der mehreren zweiten Speicherknoten mindestens eines der folgenden Elemente speichert: (i) eine Kopie von mindestens einem Abschnitt der Daten, die das Ziel des E/A-Lesevorgangs sind, oder (ii) mindestens einen Abschnitt der Paritätsinformationen, die der Kopie der Daten entsprechen, die das Ziel des E/A-Lesevorgangs sind.

10. Verfahren nach einem der vorhergehenden Ansprüche, wobei das Priorisieren des Lese-E/A-Vorgangs zur Zuweisung zu mindestens einem des einen oder der mehreren ersten Speicherknoten mindestens eines umfasst von:
Zuweisen des Lese-E/A-Vorgangs zu mindestens einem des einen oder der mehreren ersten Speicherknoten bevorzugt vor einem des einen oder der mehreren zweiten Speicherknoten;
Zuweisen des Lese-E/A-Vorgangs zu mindestens einem des einen oder der mehreren zweiten Speicherknoten, wenn eine E/A-Last auf mindestens einem des einen oder der mehreren ersten Speicherknoten einen Schwellenwert überschreitet;
Zuweisen des Lese-E/A-Vorgangs zu mindestens einem zweiten Speicherknoten auf der Grundlage einer Zeitdauer, über die der mindestens eine zweite Speicherknoten im Vergleich zu einem oder mehreren anderen der zweiten Speicherknoten im Modus mit reduziertem Durchsatz gearbeitet hat; oder
Verhindern, dass der Lese-E/A-Vorgang einem des einen oder der mehreren zweiten Speicherknoten zugewiesen wird.

11. Verfahren nach einem der vorhergehenden Ansprüche, wobei der eine oder die mehreren entsprechenden normalen E/A-Leistungsschwellenwerte für mindestens einen Speicherknoten mindestens eines einschließt von:
eine Schwellenlatenz für Reaktionen auf E/A-Vorgänge, die an den mindestens einen Speicherknoten gerichtet sind;
eine Schwellenausfallrate für E/A-Vorgänge, die an den mindestens einen Speicherknoten gerichtet sind; oder
eine Schwellen-Timeout-Rate für E/A-Vorgänge, die an mindestens einen Speicherknoten gerichtet sind.

12. Verfahren nach einem der vorhergehenden Ansprüche, wobei der eine oder die mehreren entsprechenden normalen E/A-Leistungsschwellenwerte für alle Speicherknoten innerhalb der ausfallsicheren Gruppe identisch sind.

13. Verfahren nach einem der vorhergehenden Ansprüche, wobei der eine oder die mehreren entsprechenden normalen E/A-Leistungsschwellenwerte für alle Speicherknoten innerhalb der ausfallsicheren Gruppe, die eine entsprechende Speichervorrichtung desselben Typs einschließen, identisch sind.

14. Verfahren nach einem der vorhergehenden Ansprüche, wobei das Markieren von mindestens einem des einen oder der mehreren zweiten Speicherknoten als ausgefallen verhindert wird, indem dem Lese-E/A-Vorgang für die Zuweisung zu dem einen oder den mehreren ersten Speicherknoten Priorität eingeräumt wird und die Schreib-E/A-Vorgänge für die Zuweisung zu dem einen oder den mehreren zweiten Speicherknoten in die Warteschlange eingereiht werden.

15. Computersystem (101), umfassend Mittel zum adaptiven Verwalten von Eingabe-/Ausgabevorgängen (E/A) an einen oder mehreren zweiten Speicherknoten, die in einem Modus mit reduziertem Durchsatz arbeiten, während die Synchronisierung von Knoten in einer ausfallsicheren Gruppe von Speicherknoten, die den einen oder die mehreren zweiten Speicherknoten und mindestens einen weiteren Speicherknoten umfasst, aufrechterhalten wird, wobei das Computersystem eingerichtet ist zum:
Klassifizieren eines oder mehrerer erster Speicherknoten (110b) in der ausfallsicheren Gruppe von Speicherknoten (110) als in einem normaler Durchsatzmodus arbeitend, auf der Grundlage des Bestimmens, dass jeder der einen oder der mehreren ersten Speicherknoten innerhalb eines oder mehrerer entsprechender normaler E/A-Leistungsschwellenwerte für den jeweiligen ersten Speicherknoten arbeitet, wobei mindestens einer des einen oder der mehreren normalen E/A-Leistungsschwellenwerte für den jeweiligen ersten Speicherknoten auf der Grundlage der vergangenen E/A-Leistung des jeweiligen ersten Speicherknotens bestimmt wird;
Klassifizieren der einen oder mehreren zweiten Speicherknoten (110a) in der ausfallsicheren Gruppe (110) von Speicherknoten als in einem Modus mit reduziertem Durchsatz arbeitend, auf der Grundlage des Bestimmens, dass jeder der einen oder der mehreren zweiten Speicherknoten außerhalb eines oder mehrerer entsprechender normaler I/O-Leistungsschwellenwerte für den jeweiligen zweiten Speicherknoten arbeitet, wobei mindestens einer des einen oder der mehreren normalen I/O-Leistungsschwellenwerte für den jeweiligen zweiten Speicherknoten auf der Grundlage der vergangenen I/O-Leistung des jeweiligen zweiten Speicherknotens bestimmt wird; und
während der eine oder die mehreren zweiten Speicherknoten als im Modus mit reduziertem Durchsatzmodus arbeitend klassifiziert sind:
Einreihen eines Lese-E/A-Vorgangs für die ausfallsichere Gruppe von Speicherknoten in eine Warteschlange, einschließlich, auf der Grundlage des einen oder der mehreren zweiten Speicherknoten, die im Modus mit reduziertem Durchsatz arbeiten, des Priorisierens des Lese-E/A-Vorgangs zur Zuweisung an den einen oder die mehreren ersten Speicherknoten, wobei der Lese-E/A-Vorgang für den einen oder die mehreren ersten Speicherknoten priorisiert wird, um die E/A-Last auf dem einen oder den mehreren zweiten Speicherknoten während des Arbeitens im Modus mit reduziertem Durchsatz zu reduzieren; und
Einreihen eines oder mehrerer Schreib-E/A-Vorgänge in den einen oder die mehreren zweiten Speicherknoten in die Warteschlange, auch wenn diese sich im Modus mit reduziertem Durchsatz befinden, wobei der eine oder die mehreren Schreib-E/A-Vorgänge für einen oder die mehreren zweiten Speicherknoten in die Warteschlange eingereiht werden, um die Synchronisierung der Knoten mit der ausfallsicheren Gruppe von Speicherknoten während des Arbeitens im Modus mit reduziertem Durchsatz aufrechtzuerhalten.

## Revendications

1. Procédé (200), mis en oeuvre à un système informatique qui comprend au moins un processeur, pour gérer de manière adaptative des opérations d'entrée/sortie (E/S) vers un ou plusieurs seconds noeuds de stockage qui fonctionnent en mode de débit réduit, tout en maintenant la synchronisation des noeuds dans un groupe résilient de noeuds de stockage qui comprend le ou les seconds noeuds de stockage et au moins un autre noeud de stockage, le procédé comprenant :
le classement (201) d'un ou de plusieurs premiers noeuds de stockage du groupe résilient de noeuds de stockage fonctionnant dans un mode de débit normal, sur la base de la détermination du fait que chacun du ou des premiers noeuds de stockage fonctionne dans les limites d'un ou plusieurs seuils de performances d'E/S normales correspondants pour le premier noeud de stockage respectif, au moins un parmi le ou les seuils de performances d'E/S normales pour les premiers noeuds de stockage respectifs sont déterminés sur la base des performances d'E/S passées du premier noeud de stockage respectif ;
le classement (202) du ou des plusieurs seconds noeuds de stockage dans le groupe résilient de noeuds de stockage fonctionnant dans un mode de débit réduit, sur la base de la détermination du fait que chacun du ou des seconds noeuds de stockage fonctionnent en dehors d'un ou plusieurs seuils de performances d'E/S normales correspondants pour le second noeud de stockage respectif, au moins l'un du ou des seuils de performances d'E/S normales pour le second noeud de stockage respectif sont déterminés sur la base des performances d'E/S passées du second noeud de stockage respectif ; et
tant que le ou les seconds noeuds de stockage sont classés comme fonctionnant dans le mode de débit réduit :
la mise en file d'attente (203) d'une opération de lecture d'E/S pour le groupe résilient de noeuds de stockage, comprenant, sur la base du ou des seconds noeuds de stockage fonctionnant dans le mode de débit réduit, la priorisation de l'opération d'E/S de lecture pour une affectation au ou aux premiers noeuds de stockage, l'opération d'E/S de lecture étant la priorité sur le ou les premiers noeuds de stockage pour réduire la charge d'E/S (204) sur le ou les seconds noeuds de stockage tout en fonctionnant dans le mode de débit réduit ; et
la mise en file d'attente (203) d'une ou de plusieurs opérations d'E/S d'écriture vers le ou les seconds noeuds de stockage même s'ils sont en mode de débit réduit, la ou les opérations d'E/S d'écriture étant mises en file d'attente vers le ou les seconds noeuds de stockage pour maintenir la synchronisation (205) des noeuds au sein du groupe résilient de noeuds de stockage tout en fonctionnant en mode de débit réduit.

2. Procédé selon la revendication 1, comprenant en outre, après la mise en file d'attente de l'opération d'E/S de lecture et la mise en file d'attente de la ou des opérations d'E/S d'écriture, la reclassification (206) d'au moins un des seconds noeuds de stockage comme fonctionnant dans le mode de débit normal, sur la base de la détermination du fait que le ou les seconds noeuds de stockage fonctionnent dans les limites du ou des seuils de performances d'E/S normales correspondants pour le ou les seconds noeuds de stockage.

3. Procédé selon la revendication 2, comprenant en outre, sur la base de l'au moins un second noeud de stockage fonctionnant dans le mode de débit normal, la priorisation (207) d'une opération d'E/S de lecture ultérieure pour une affectation à l'au moins un second noeud de stockage.

4. Procédé selon l'une quelconque des revendications 2 ou 3, dans lequel l'au moins un second noeud de stockage fonctionne ensuite dans les limites du ou des seuils de performances d'E/S normales correspondants pour l'au moins un second noeud de stockage après avoir donné la priorité à l'opération d'E/S de lecture pour l'affectation au ou aux premiers noeuds de stockage, plutôt que d'affecter l'opération d'E/S de lecture au ou aux seconds noeuds de stockage.

5. Procédé selon la revendication 1, comprenant en outre au moins l'un des éléments suivants :
après la mise en file d'attente de l'opération d'E/S de lecture, reclasser (208) au moins un des seconds noeuds de stockage comme étant défaillant, sur la base de la détermination du fait que le ou les seconds noeuds de stockage n'ont pas réussi à répondre à l'opération d'E/S de lecture dans un premier laps de temps seuil ; ou
après la mise en file d'attente des opérations d'E/S d'écriture, reclasser (208) au moins un des seconds noeuds de stockage comme étant défaillant, sur la base de la détermination du fait que le ou les seconds noeuds de stockage n'ont pas réussi à répondre à au moins une des opérations d'E/S d'écriture dans un second délai seuil.

6. Procédé selon la revendication 5, comprenant en outre, après avoir reclassé l'au moins un second noeud de stockage comme défaillant, la réparation (209) de l'au moins un second noeud de stockage pour le restaurer dans le groupe résilient.

7. Procédé selon l'une quelconque des revendications précédentes, dans lequel au moins l'un du ou des premiers noeuds de stockage ou du ou des seconds noeuds de stockage comprend un dispositif de stockage.

8. Procédé selon l'une quelconque des revendications précédentes, dans lequel au moins l'un du ou des premiers noeuds de stockage ou du ou des seconds noeuds de stockage comprend un système informatique distant en communication avec le système informatique.

9. Procédé selon l'une quelconque des revendications précédentes, dans lequel chacun du ou des premiers noeuds de stockage et chacun du ou des seconds noeuds de stockage stocke au moins l'un des éléments suivants : (i) une copie d'au moins une partie de données qui sont une cible de l'opération d'E/S de lecture, ou (ii) au moins une partie d'informations de parité correspondant à la copie de données qui sont la cible de l'opération d'E/S de lecture.

10. Procédé selon l'une quelconque des revendications précédentes, dans lequel la priorisation de l'opération d'E/S de lecture pour l'affectation à au moins l'un du ou des premiers noeuds de stockage comprend au moins l'un des éléments suivants :
affecter l'opération d'E/S de lecture à au moins l'un du ou des premiers noeuds de stockage de préférence à l'un quelconque du ou des seconds noeuds de stockage ;
affecter l'opération d'E/S de lecture à au moins l'un u ou des seconds noeuds de stockage lorsqu'une charge d'E/S sur au moins un du ou des premiers noeuds de stockage dépasse un seuil ;
affecter l'opération d'E/S de lecture à au moins un second noeud de stockage sur la base d'une durée pendant laquelle le ou les seconds noeuds de stockage ont fonctionné dans le mode de débit réduit par rapport à un ou plusieurs autres des seconds noeuds de stockage ; ou
empêcher l'opération d'E/S de lecture d'être affectée à l'un quelconque du ou des seconds noeuds de stockage.

11. Procédé selon l'une quelconque des revendications précédentes, dans lequel le ou les seuils de performances d'E/S normales correspondants pour au moins un noeud de stockage comprennent au moins l'un des éléments suivants :
une latence seuil pour les réponses aux opérations d'E/S dirigées vers le ou les noeuds de stockage ;
un taux de défaillance seuil pour les opérations d'E/S dirigées vers le ou les noeuds de stockage ; ou
un taux de temporisation seuil pour les opérations d'E/S dirigées vers le ou les noeuds de stockage.

12. Procédé selon l'une quelconque des revendications précédentes, dans lequel le ou les seuils de performances d'E/S normales correspondants sont identiques pour tous les noeuds de stockage au sein du groupe résilient.

13. Procédé selon l'une quelconque des revendications précédentes, dans lequel le ou les seuils de performances d'E/S normales correspondants sont identiques pour tous les noeuds de stockage au sein du groupe résilient qui incluent un dispositif de stockage correspondant du même type.

14. Procédé selon l'une quelconque des revendications précédentes, dans lequel le marquage d'au moins un du ou des seconds noeuds de stockage comme étant défaillant est empêché en donnant la priorité à l'opération d'E/S de lecture pour une affectation au ou aux premiers noeuds de stockage et en mettant en file d'attente les opérations d'E/S d'écriture pour l'affectation au ou aux seconds noeuds de stockage.

15. Système informatique (101) comprenant des moyens pour gérer de manière adaptative des opérations d'entrée/sortie (E/S) vers un ou plusieurs seconds noeuds de stockage qui fonctionnent dans un mode de débit réduit, tout en maintenant la synchronisation de noeuds dans un groupe résilient de noeuds de stockage qui comprennent le ou les seconds noeuds de stockage et au moins un autre noeud de stockage, le système informatique étant agencé pour :
classer un ou plusieurs premiers noeuds de stockage (110b) du groupe résilient (110) de noeuds de stockage fonctionnant dans un mode de débit normal, sur la base de la détermination du fait que chacun du ou des premiers noeuds de stockage fonctionne dans les limites d'un ou plusieurs seuils de performances d'E/S normales correspondants pour le premier noeud de stockage respectif, au moins un parmi le ou les seuils de performances d'E/S normales pour les premiers noeuds de stockage respectifs sont déterminés sur la base des performances d'E/S passées du premier noeud de stockage respectif ;
classer le ou les plusieurs seconds noeuds de stockage (110a) dans le groupe résilient (110) de noeuds de stockage fonctionnant dans un mode de débit réduit, sur la base de la détermination du fait que chacun du ou des seconds noeuds de stockage fonctionnent en dehors d'un ou plusieurs seuils de performances d'E/S normales correspondants pour le second noeud de stockage respectif, au moins l'un du ou des seuils de performances d'E/S normales pour le second noeud de stockage respectif sont déterminés sur la base des performances d'E/S passées du second noeud de stockage respectif ; et
tant que le ou les seconds noeuds de stockage sont classés comme fonctionnant dans le mode de débit réduit :
mettre en file d'attente une opération de lecture d'E/S pour le groupe résilient de noeuds de stockage, comprenant, sur la base du ou des seconds noeuds de stockage fonctionnant dans le mode de débit réduit, la priorisation de l'opération d'E/S de lecture pour une affectation au ou aux premiers noeuds de stockage, l'opération d'E/S de lecture étant la priorité sur le ou les premiers noeuds de stockage pour réduire la charge d'E/S sur le ou les seconds noeuds de stockage tout en fonctionnant dans le mode de débit réduit ; et
mettre en file d'attente une ou plusieurs opérations d'E/S d'écriture vers le ou les seconds noeuds de stockage même s'ils sont en mode de débit réduit, la ou les opérations d'E/S d'écriture étant mises en file d'attente vers le ou les seconds noeuds de stockage pour maintenir la synchronisation des noeuds avec le groupe résilient de noeuds de stockage tout en fonctionnant en mode de débit réduit.
